# EUROPÄISCHE PATENTANMELDUNG

(11) **EP 1 968 328 A2**
(43) Veröffentlichungstag der Anmeldung: **10.09.2008**
(21) Anmeldenummer: 08450029.7
(22) Anmeldetag: 07.03.2008
(51) Int. Cl.: H04N 7/52

(54) **Verfahren zur gleichzeitigen Übertragung mehrerer Sendungen in einem digitalen Übertragungsdatenstrom**

(30) Priorität: 07.03.2007 AT 3642007
(71) Anmelder: F5 Programmentwicklung GmbH, 1140 Wien (AT)
(72) Erfinder: Hackenberg, Harald, 1160 Wien (AT)
(74) Vertreter: Margotti, Herwig Franz

(57) **Zusammenfassung**

Bei einem Verfahren zur gleichzeitigen Übertragung einer Hauptsendung (HS) und zumindest einer Zusatzsendung (ZS) in einem digitalen Übertragungsdatenstrom (TDS) über einen Rundfunkkanal (CH) mit einer vorgegebenen maximalen Kanalbandbreite (Bmax) wird die zumindest eine Zusatzsendung (ZS) vor ihrer Übertragung in Fragmente (FRx) unterteilt und werden die einzelnen Fragmente (FRx) asynchron in den Übertragungsdatenstrom (TDS) eingefügt, wenn die Hauptsendung (HS) im Übertragungsdatenstrom (TDS) nicht die maximale Kanalbandbreite (Bmax) des Rundfunkkanals (CH) beansprucht.

## Beschreibung

Die Erfindung betrifft ein Verfahren zur gleichzeitigen Übertragung einer Hauptsendung und zumindest einer Zusatzsendung und/oder Zusatzinformation (ZI) in einem digitalen Übertragungsdatenstrom über einen Rundfunkkanal mit einer vorgegebenen maximalen Kanalbandbreite.

Die Erfindung betrifft weiters eine Rundfunksendeeinrichtung und eine Rundfunkempfangseinrichtung zur Durchführung des erfindungsgemäßen Verfahrens.

Aus der PCT-Anmeldung WO 2005/050991 A1 ist ein Verfahren zur Übermittlung benutzerspezifischer Information in einem Rundfunksystem bekannt, bei dem Benutzern in einem Empfangsgebiet des Rundfunksystems gleichzeitig erste Sendungen und alternierend dazu zweite Sendungen, die anhand eines gespeicherten Benutzerprofils ausgewählt werden, angezeigt werden. Bei einer bevorzugten Ausführungsform dieses Verfahrens werden gleichzeitig zu ersten Sendungen zweite Sendungen bzw. auch deren Zuordnungen zu einem Benutzerprofil von einer Rundfunksendeeinrichtung ausgestrahlt. Das Verfahren macht sich dabei die Tatsache zunutze, dass ein Übertragungskanal, über den die erste Sendung übertragen wird, gewöhnlich Bandbreiten-Reserven aufweist, die zur Übertragung der zweiten Sendungen genutzt werden können.

Nachteilig an diesem bekannten Verfahren ist jedoch, dass die zweiten Sendungen in einem Stück zur Gänze synchron und in Echtzeit übertragen werden müssen, damit sie in dem Rundfunkempfangsgerät zwischengespeichert und später abgespielt werden können. Dazu muss zumindest jene Bandbreite verfügbar sein die der Bandbreite der zu übertragenden zweiten Sendung entspricht. Da das Übertragen der zweiten Sendungen im Hintergrund abläuft und von dem Benutzer somit nicht bemerkt wird, ist nicht auszuschließen, dass der Benutzer während der Übertragung der zweiten Sendungen sein Rundfunkempfangsgerät abschaltet oder den Kanal wechselt und die zweite Sendung somit nicht vollständig empfangen wird. Derzeitige Standards, die in Rundfunkempfangsgeräten, wie z.B. Set Top Boxen implementiert sind, sehen keine Maßnahmen vor, eine unvollständig empfangene Sendung abzuspielen. Dies ist insofern problematisch, da in dem bekannten Verfahren vorgesehen ist, unter Steuerung eines von der Rundfunksendeeinrichtung gesendeten Unterbrechungssignals das Abspielen der ersten Sendung zu unterbrechen und stattdessen die zweite Sendung abzuspielen. Wenn diese aber nicht vollständig zwischengespeichert ist, treten Sendeunterbrechungen auf, die den Benutzer verärgern. Abhilfe kann gemäß dem bekannten Verfahren nur durch das Abspielen einer im Empfangsgerät vorgespeicherten Standard-Sendung geschaffen werden.

In dem bekannten Verfahren wird zur Lösung dieses Problems vorgeschlagen, die zweite Sendung mit höherer Datenkomprimierung und somit verringerter (Bild-)Qualität zu übertragen, was aus Sicht des Benutzers aber eine sehr unbefriedigende Maßnahme ist.

Der vorliegenden Erfindung liegt die Aufgabe zugrunde, ein Verfahren zur gleichzeitigen Übertragung einer Hauptsendung und zumindest einer Zusatzsendung in einem digitalen Übertragungsdatenstrom über einen Rundfunkkanal mit einer vorgegebenen Kanalbandbreite vorzuschlagen, das die Nachteile des Standes der Technik überwindet und insbesondere zu verbessert planbaren Übertragungszeiten für die Zusatzsendungen führt und das Risiko verringert, dass in einem Rundfunkempfangsgerät die Zusatzsendung nicht vollständig empfangen und zwischengespeichert werden kann.

Die Erfindung löst diese Aufgabe durch Bereitstellen eines Verfahrens zur gleichzeitigen Übertragung einer Hauptsendung und zumindest einer Zusatzsendung in einem digitalen Übertragungsdatenstrom über einen Rundfunkkanal mit einer vorgegebenen Kanalbandbreite, gemäß den Merkmalen des Anspruchs 1. Weiters schlägt die Erfindung eine Rundfunksendeeinrichtung und eine Rundfunkempfangseinrichtung vor, mit denen das erfindungsgemäße Verfahren abgearbeitet werden kann. Vorteilhafte Ausgestaltungen der Erfindung sind in den Unteransprüchen dargelegt.

Neben den bereits genannten Vorteilen bietet die Erfindung die weiteren Vorteile, dass sie ohne große Hardwareinvestitionen in bestehende Rundfunksysteme integriert werden kann, dass die vorhandene Kanalbandbreite besser ausgenützt wird und dass die Programmplaner eine wesentlich größere Flexibilität bei der Planung der Übertragungen der Hauptsendungen und der Zusatzsendungen an die Hand bekommen als bei dem bekannten Verfahren. Die einzelnen Fragmente der Zusatzsendungen und die Information, wie sie zu einer Zusatzsendung zusammenzusetzen sind und/oder Zusatzinformation, können in definierten Zeitabständen oder in Abhängigkeit von gewissen Programmereignissen mehrmals übertragen werden, so dass selbst in dem Fall, dass einzelne Fragmente der Zusatzsendung nicht im Rundfunkempfangsgerät empfangen wurden, weil der Benutzer es abgeschaltet oder auf einen anderen Kanal umgeschaltet hat, der spätere Empfang möglich ist, wobei aber nur die ursprünglich nicht empfangenen Fragmente der Zusatzsendung erneut empfangen werden müssen. Die Möglichkeit, die einzelnen Fragmente der Zusatzsendungen und/oder Zusatzinformation in Abhängigkeit von gewissen Programmereignissen zu senden, eröffnet Rundfunkanstalten eine Vielzahl an Anwendungsmöglichkeiten der Erfindung, einschließlich einer Art von Belohnungssystem, indem der Benutzer Zusatzsendungen geboten bekommt, wenn er zu gewissen Zeiten oder bei gewissen Hauptsendungen sein Rundfunkempfangsgerät eingeschaltet hat. Die Zusatzinformationen können z.B. als digitale "Wertmarken" behandelt werden, von denen der Benutzer bzw. das Client-Gerät eine gewisse Anzahl oder bestimmte Arten davon "sammeln" muss, um Zugriff auf bestimmte Programme bzw. Zusatzprogramme oder andere Dienste zu erhalten.

Weitere Merkmale der Erfindung sind in den Unteransprüchen dargelegt. Die dadurch erzielbaren Vorteile ergeben sich aus der nachfolgenden ausführlichen Beschreibung von Ausführungsformen der Erfindung.

Die Erfindung wird nun anhand von Ausführungsbeispielen unter Bezugnahme auf die Zeichnungen näher erläutert.

In den Zeichnungen zeigen:
Fig. 1 ein Blockschaltbild einer ersten erfindungsgemäßen Ausführungsform einer Rundfunksendeeinrichtung, in der das erfindungsgemäße Verfahren abgearbeitet wird;
Fig. 2 ein Blockschaltbild einer zweiten erfindungsgemäßen Ausführungsform einer Rundfunksendeeinrichtung, in der das erfindungsgemäße Verfahren abgearbeitet wird;
Fig. 3 ein Diagramm des Verlaufs der Nutzung der Kanalbandbreite B des Übertragungskanals durch den erfindungsgemäß aufbereiteten Übertragungsdatenstrom;
Fig. 4 eine schematische Darstellung einer Datei mit Information über die Reihenfolge der Fragmente, in der eine Zusatzsendung zusammenzusetzen ist;
Fig. 5 eine schematische Darstellung einer aus Fragmenten zusammengesetzten Zusatzsendung;
Fig. 6 eine schematische Darstellung eines erfindungsgemäßen Embedded Content Server; und
Fig. 7 ein schematisches Blockschaltbild einer erfindungsgemäßen Rundfunkempfangseinrichtung.

Das erfindungsgemäße Verfahren, das in der folgenden Beschreibung auch als EDIBS (Embedded DIgital Broadcast Services) bezeichnet wird, ermöglicht die gleichzeitige Übertragung einer Hauptsendung und zumindest einer Zusatzsendung in einem digitalen Übertragungsdatenstrom über einen Rundfunkkanal mit einer vorgegebenen Kanalbandbreite. EDIBS umfasst zwei "Anwendungsdomänen". Die eine Anwendungsdomäne ist an der Sendeseite einer Rundfunksendeeinrichtung lokalisiert und agiert als Server, die zweite Anwendungsdomäne wirkt als Client und befindet sich an der Empfängerseite des Rundfunkkanals in den Rundfunkempfangseinrichtungen, die vorzugsweise als Set Top Boxen (STB) ausgebildet sind. In einer günstigen Ausgestaltung sind die STBs MHP kombatibel. MHP (Multimedia Home Platform) ist ein Standard, der auf einer Java Virtual Machine basiert, die in der STB läuft. MHP definiert eine Schnittstelle zwischen interaktiven digitalen Anwendungen und den Geräten, auf denen diese Anwendungen ausgeführt werden.

Die senderseitige Anwendungsdomäne des erfindungsgemäßen Verfahrens EDIBS wird in einem Serverrechner abgearbeitet, der nachfolgend als ECS (Embedded Content Server) bezeichnet wird. Der ECS wirkt als Server, der Fragmente von Zusatzsendungen bereitstellt und für das Einfügen der Fragmente in einen Übertragungsdatenstrom sorgt, mit dem eine Hauptsendung übertragen wird. Weiters kann der ECS Zusatzinformation generieren, die als so genannte "Flags" den Client-Geräten z.B. mitteilen, wo im Programmfluss der Hauptsendung man sich momentan befindet. Ein wesentliches Merkmal des erfindungsgemäßen Verfahrens ist es, dass die Fragmente der Zusatzsendungen asynchron in den Übertragungsdatenstrom eingefügt werden, und zwar zu Zeiten, in denen der für die Übertragung der Hauptsendung generierte Übertragungsdatenstrom nicht die gesamte Kanalbandbreite des Rundfunkkanals beansprucht. Ein kommerzieller DVB-S (Digital Video Broadcasting für Satellitenübertragung) hat beispielsweise eine Kanalbandbreite von ca. 30 - 35 Mbit/s. Aufgrund von Konfigurationsbeschränkungen von Encodern und Multiplexern in der Rundfunksendeeinrichtung etc. bleibt durchschnittlich eine Restbandbreite von bis zu 2 Mbit/s dieser Kanalbandbreite ungenutzt bzw. wird mit Füllbits aufgefüllt. Wie weiter unten näher erklärt, können in einer Ausführungsform des erfindungsgemäßen Verfahrens diese Füllbits durch Datenbits der Fragmente der Zusatzsendungen ersetzt werden. Auf der Empfangsseite des Rundfunkkanals wird der Übertragungsdatenstrom von einer Rundfunkempfangseinrichtung empfangen, und der empfangsseitige Clientteil des erfindungsgemäßen Verfahrens verarbeitet den Übertragungsdatenstrom, indem die empfangenen Fragmente in einem Speicher der Rundfunkempfangseinrichtung zwischengespeichert und zu den Zusatzsendungen zusammengesetzt werden, die später abgespielt werden, wenn gewisse Voraussetzungen erfüllt sind, die von der Rundfunkanstalt vordefiniert werden.

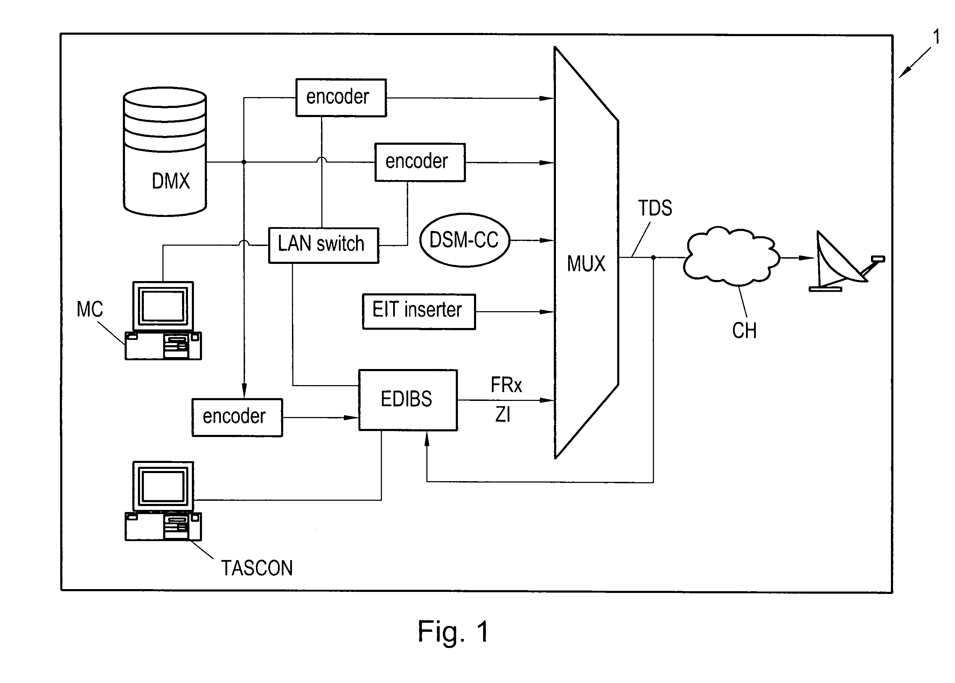

Unter Bezugnahme auf Fig. 1 wird nun eine Rundfunksendeeinrichtung 1 erläutert, in der das erfindungsgemäße Verfahren implementiert ist. Die Rundfunksendeeinrichtung umfasst einen Video-Server DMX, in dem eine Vielzahl an Medieninhalten, wie z.B. Spielfilme, gespeichert ist, eine Managementkonsole MC, ein Objektkarussell DSM-CC, das digitale Speichermedien sowie deren Steuerung umfasst, eine sogenannte "Television Automatic Sequence Control" TASCON, einen EIT Inserter, der "EPG" (Electronic Program Guide) Information, wie die Startzeit, Titel und Länge einer Sendung bereitstellt. Für den geeigneten Transport von Datenströmen, insbesondere Video- und Audioströmen, innerhalb der Rundfunksendeeinrichtung sind in den Datenleitungen Encoder vorgesehen. Die verschiedenen Datenquellen innerhalb der Rundfunksendeeinrichtung 1 sind an die Eingänge eines Multiplexers MUX geführt, der aus den an seinen Eingängen einlangenden Inhalten einen Übertragungsdatenstrom TDS generiert, der auf dem Gebiet der Erfindung auch als Transportdatenstrom bezeichnet wird. Der Übertragungsdatenstrom TDS wird anschließend über einen Rundfunkkanal CH an nicht dargestellte Rundfunkempfangsgeräte übertragen. Die diversen Komponenten der Rundfunksendeeinrichtung 1 sind untereinander durch einen LAN Switch verbunden.

Soweit bis jetzt beschrieben, ist die Rundfunksendeeinrichtung 1 Stand der Technik. Sie wird jedoch erfindungsgemäß ergänzt durch einen Embedded Content Server (ECS), auf dem das erfindungsgemäße Verfahren EDIBS softwaregesteuert abläuft, wobei EDIBS alle Aufgaben erledigt, die für das Management, die Einbettung und Übertragung von Zusatzsendungen in den Übertragungsdatenstrom TDS erforderlich sind.

Bevor jedoch die Erfindung im Detail erläutert wird, erscheint es zum besseren Verständnis der Erfindung angebracht, auf einige bekannte Komponenten der Rundfunkeinrichtung 1 näher einzugehen.

Die "Television Automatic Sequence Control" TASCON ist eine computerimplementierte Steuerung, die allgemein für Ausspielen der Programme der Rundfunkanstalt verantwortlich ist. Üblicherweise startet die Planung eines TV-Programms Monate bevor das Programm ausgestrahlt wird. Der Programm-Planungsverantwortliche öffnet Zeitschlitze innerhalb eines Tagesplans für Filme, Serien, Nachrichten, Werbung etc. Zum Zeitpunkt der Eröffnung der Zeitschlitze steht noch wenig Information über die Länge, den Inhalt oder andere Eigenschaften eines jeden Programmelements zur Verfügung. Daher werden diese Zeitschlitze, die jeweils einem einzelnen Programmelement zugeordnet sind, mit realen oder virtuellen Inhaltselementen der Inhaltsdatenbank oder der Lizenzdatenbank der Rundfunkanstalt verlinkt. Je näher der Ausstrahlungstag rückt, umso mehr Information über die Programmelemente wird verfügbar, da die Produzenten bereits gewisse Magazine fertiggestellt haben, Spielfilmbänder bereits eingetroffen sind und editiert wurden, Werbespots verkauft wurden, etc., so dass die Länge der Programmpausen nun abgeschätzt werden kann. Die Programmplanung wird ständig aktualisiert und überarbeitet, um sicherzustellen, dass jedes Programm pünktlich startet und alle Elemente zusammen pro Tag und Rundfunkkanal nicht eine Länge von 24 Stunden überschreiten. Sobald dies erreicht ist, wird der Programmplan an das Ausspielzentrum der Rundfunkanstalt übergeben. Der Programmplan ist eine Tabelle mit einer Vielzahl von Reihen und Spalten, in denen für jedes Programmereignis eine bestimmte Zeit, eine eindeutige Inhalts-ID und ein Inhaltstitel eingetragen sind. Ein Techniker fügt nun zusätzliche Reihen in der Tabelle hinzu, beispielsweise für das Anzeigen eines Senderlogos in einer Ecke des Fernsehbilds, das Einfügen von Schwarzblenden zur Trennung von Sendungen etc. Danach wird jedes Programmereignis mit einem bestimmten Gerät verlinkt, von dem das zugeordnete Audio- und/oder Videoprogrammereignis abgespielt wird. Das Resultat dieser Arbeit ist eine wesentlich detailliertere Liste mit Hunderten von Anweisungen mit detaillierter Zeitinformation mit einer Genauigkeit bis auf einzelne Videoframes. Diese Liste wird an die Managementkonsole MC weitergeleitet (alternativ dazu wird sie direkt in der Managementkonsole MC erzeugt), wobei die Managementkonsole ein Computer ist, auf dem eine Echtzeit-Anwendung läuft, die alle für das Ausspielen der Programme relevanten Geräte steuert. Das TASCON hat manchmal Dutzende Interfaces, die mit Bandabspielgeräten, Videoservern, Grafikgeneratoren etc. verbunden sind.

Nun wird die Funktionsweise des erfindungsgemäßen Embedded Content Server (ECS) und des darauf ablaufenden erfindungsgemäßen Verfahrens im Überblick beschrieben.

Zunächst müssen alle Zusatzsendungen, die über den EDIBS ECS durch Einbetten in den Übertragungsdatenstrom ausgespielt werden sollen, digital in den ECS eingespielt und im ECS lokal gespeichert werden. Alternativ dazu werden die Zusatzsendungen selbst extern gespeichert und nur Bezüge auf diese Zusatzsendungen lokal gespeichert. Die Zusatzsendungen werden im ECS mit einer eindeutigen Zusatzsendungskennung versehen, um innerhalb der Rundfunksendeeinrichtung weiter verarbeitet werden zu können. Sobald eine neue Zusatzsendungsdatei vorliegt, muss ein Programm-Manager diese Datei entweder mit einem bestimmten TV-Programmereignis oder einem bestimmten Zeitplan verlinken, um das zukünftige eingebettete Ausspielen der Zusatzsendung zu managen. Durch den Verlinkungsvorgang wird eine eindeutige Programmkennung mit der lokalen, eindeutigen Zusatzsendungskennung verknüpft und anschließend eine Berechnung durchgeführt, bei der ermittelt wird, ob eine eingebettete Übertragung des Zusatzprogramms während einer gegebenen Programmdauer möglich ist. Die Berechnung basiert auf statistischer Information über die vergangene Bandbreitensituation, die in der ECS Datenbank gespeichert ist. Da die Zusatzsendungen üblicherweise zu lang sind, um sinnvoll in einem Stück gleichzeitig mit einer Hauptsendung übertragen zu werden, werden die Dateien der Zusatzsendungen in Fragmente zerlegt, die jeweils einen Teil des Sendungsinhalts enthalten, beispielsweise Sendungsstücke mit einer Länge zwischen 10 und 20 Sekunden darstellen. Die Größe der Fragmente und ein Vorschlag für ein Ausspielmuster werden in Abhängigkeit von einem oder mehreren der folgenden Parameter festgelegt:
- der zu erwartende durchschnittliche ungenutzte Anteil der Kanalbandbreite;
- die Dauer der Hauptsendung, wenn festgelegt ist, dass vorgegebene Fragmente während der Hauptsendung zu übertragen sind;
- die Codierungsqualität der Zusatzsendung;
- die Nettodauer der Zusatzsendung.

Die Fragmente stehen dabei in Beziehung zu Programmereignissen oder Zeitplänen, die entweder für die Zusatzsendung festgelegt wurden oder für die Fragmente einzeln festgelegt werden.

Das vorgeschlagene Ausspielmuster kann entweder händisch oder automatisch im Betrieb durch Neuberechnung modifiziert werden. Dabei kann auf den ECS vorteilhaft über ein lokales oder entferntes Terminal mittels eines WEB-basierten Benutzerinterfaces zugegriffen werden. Für die Verlinkung greift EDIBS auf Ausspielplan-Information der TASCON Datenbank oder einer anderen Programmplanungsdatenbank/Ausspielliste zu, die die Rundfunkanstalt zur Verfügung stellt.

Wenn eine Zusatzsendung bzw. ein Fragment während eines bestimmten Programmelements ausgespielt werden soll und wie oben beschrieben die Verlinkung durch den ECS vorgenommen wurde, so wartet die EDIBS ECS Software auf eine bestimmte Programmereignisinformation, die über das TASCON Interface zur Verfügung gestellt wird, um bei Eintreten diese Ereignisses die Zusatzsendung bzw. ihre Fragmente in den Übertragungsdatenstrom TDS einzubetten.

Der ECS kann auch Zusatzinformation ZI zu den Hauptsendungen generieren, wobei diese Zusatzinformation beispielsweise erkennen lässt, wo sich die Hauptsendung beim Abspielen derzeit befindet. Das heißt, die Zusatzinformation wird in diesem Fall programmereignisgesteuert ausgespielt. Alternativ kann die Zusatzinformation in einem bestimmten zeitlichen Ausspielmuster übertragen werden.

Zusatzsendungen bzw. deren Fragmente, die nicht programmereignisgesteuert ausgespielt werden sollen, müssen mit einem bestimmten zeitlichen Ausspielmuster verlinkt werden.

Das erfindungsgemäße Verfahren kann dabei verschiedene vordefinierte zeitliche Ausspielmuster anbieten. Beispielsweise können zeitliche Ausspielmuster bereitgestellt werden, die als "Vielseherpreis" konzipiert sind, indem z.B. einmal pro Monat, nach 100 Werbespots, etc. Fragmente der Zusatzsendungen ausgespielt werden. Solche Schemata müssen jedoch komplexen statistischen Erfordernissen genügen, damit sichergestellt ist, dass ein Zuseher, der ausreichend Seherzeit gesammelt hat, tatsächlich im Besitz aller Fragmente der Zusatzsendung ist, die den Preis darstellt. Umgekehrt muss sichergestellt sein, dass ein Zuseher nicht durch bloßes Laufenlassen seines Rundfunkempfangsgeräts in den Genuss des Vielseherpreises kommt. Das erwünschte Ausspielmuster der Fragmente wird im ECS gespeichert und zur Optimierung des Musters einer ständigen Neuberechnung unterzogen. Das Ausspielmuster wird durch eine Fragment-Ausspielliste repräsentiert.

Das in Bezug auf die Fragmente Gesagte gilt auch für die Zusatzinformation, die z.B. als digitale "Wertmarken" behandelt werden, von denen der Benutzer bzw. das Client-Gerät eine gewisse Anzahl ("Vielseherpreis") oder bestimmte Arten davon ("zeigt, dass der Benutzer gewisse Sendungsteile gesehen hat) "sammeln" muss, um Zugriff auf bestimmte Programme bzw. Zusatzprogramme zu erhalten.

Zusätzlich zu den Fragmenten müssen auch noch Dateien übertragen werden, die Information über die Reihenfolge enthalten, gemäß der auf einer Empfangsseite des Rundfunkkanals CH die Fragmente zu einer Zusatzsendung zusammenzusetzen sind. Dies kann erfolgen, indem bei der Unterteilung der Zusatzsendungen in Fragmente jedes Fragment mit einer eindeutigen Fragmentkennung versehen wird und die Information über die Reihenfolge, gemäß der auf einer Empfangsseite des Rundfunkkanals die Fragmente zu einer Zusatzsendung zusammenzusetzen sind, als Tabelle mit den Fragmentkennungen in der Zusammensetzungsreihenfolge aufgebaut wird. Es sei erwähnt, dass es erfindungsgemäß beabsichtigt ist, die Fragmente in durcheinandergewürfelter Reihenfolge auszuspielen, damit empfangsseitig erst dann die Zusammensetzung der Fragmente zu einer Zusatzsendung möglich ist, wenn auch die Information über die Reihenfolge der Zusammensetzung ausgespielt wurde. Die Fragmentkennungen können verschlüsselt in den Fragmenten enthalten sein, z.B. als Hash-Wert des Fragments codiert.

Es ist bevorzugt, die Reihenfolgen-Information in XML-Dateien oder verschlüsselte Dateien einzubetten, die dynamisch erzeugt werden.

Gemäß der Erfindung sind zwei unterschiedliche Varianten vorgesehen, wie die Fragmente und die XML-Dateien oder die verschlüsselten Dateien mit der Reihenfolgeninformation in den Übertragungdatenstrom TDS eingebettet werden. Die eine Möglichkeit ist, sie in das Objektkarussell DSM CC oder ein anderes Objektkarussell einzufügen, das in einer "digital video broadcasting" Umgebung die Standardmethode zum Ausstrahlen von Dateien darstellt. Das Objektkarussell ist ein digitales Speichermedium, dessen Dateisystem in der Art eines Ringspeichers organisiert ist, d.h. die eingehängten Dateien werden Position für Position ausgespielt, und nach Erreichen der letzten Position wird wieder mit der ersten Position begonnen. Das Objektkarussell eignet sich hervorragend zum Ausspielen von selten zu verändernden Dateien, die wiederholt in regelmäßigen Intervallen ausgestrahlt werden, und ist daher beispielsweise bestens geeignet, die Software auszustrahlen, in der der empfangsdomänenseitige Teil des erfindungsgemäßen Verfahrens implementiert ist.

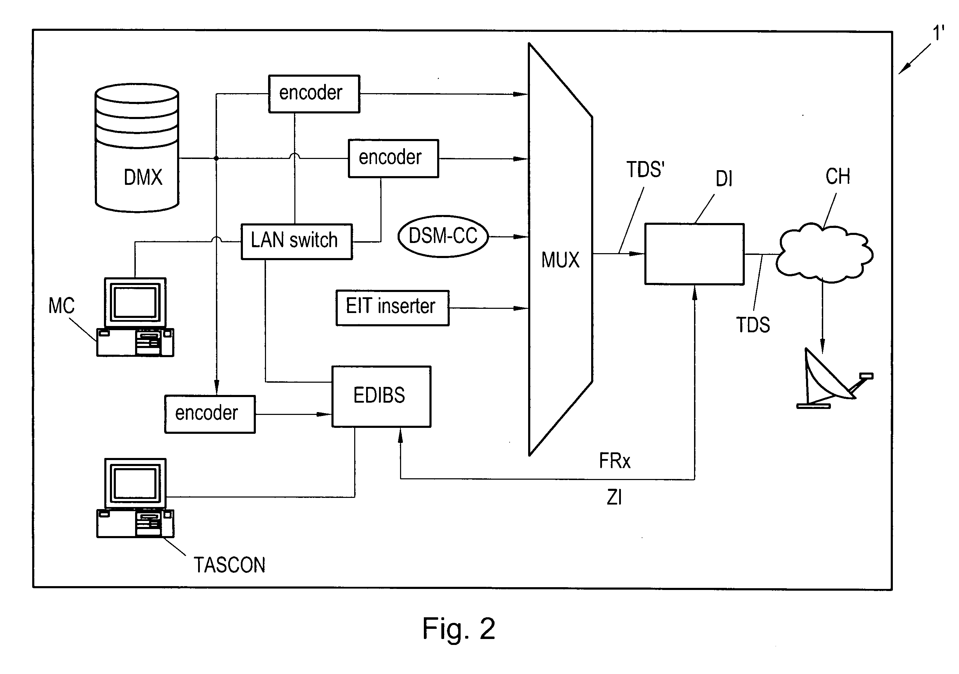

Die zweite und aufgrund der umfassenderen Steuerung bevorzugte Variante zum Einbetten der Fragmente und XML-Dateien bzw. verschlüsselten Dateien in den Übertragungsdatenstrom stellt das Einbetten in private Abschnitte des Übertragungsdatenstroms TDS dar. Dies erlaubt die exakte Kontrolle, wann, in welcher Reihenfolge und wie oft die einzelnen Fragmente und Dateien übertragen werden. Für die Zwecke der vorliegenden Erfindung macht es keinen Sinn, ein Fragment innerhalb kurzer Zeitspanne mehr als einmal zu übertragen. Dies würde vielmehr eine Verschwendung verfügbarer Bandbreite darstellen. Der Begriff "private Abschnitte des Übertragungsdatenstroms", wie hierin verwendet, bedeutet, dass, wenn freie Kanalbandbreite zur Verfügung steht, für das Einbetten der Fragmente und Dateien ein Anteil dieser verfügbaren Kanalbandbreite beansprucht werden kann. Dies bedeutet aber nicht, dass private Abschnitte des Übertragungsdatenstroms immer verfügbar sein müssen. Vielmehr ist es eine reine Frage der Priorisierung und dabei werden in Rundfunkanstalten die Übertragung von Zusatzsendungen bzw. der daraus bestehenden Fragmente und Informations- bzw. Steuerdateien eine niedrige Priorität erhalten. Nachfolgend werden anhand der Figuren 1 und 2 die beiden erfindungsgemäßen Varianten des Einbettens der Fragmente in einen privaten Abschnitt des Übertragungsdatenstroms erläutert.

In der ersten, in Fig. 1 dargestellten, Variante werden die Fragmente der Zusatzsendungen und/oder die Zusatzinformation ZI wie die anderen Bestandteile des Programms durch den Multiplexer MUX in den Übertragungsdatenstrom eingefügt, indem die Fragmente zu einem der asynchronen seriellen Interfaces (ASI) des Multiplexers MUX geführt werden. Durch das Zuführen der Fragmente zu einem ASI des Multiplexers MUX wird für sie ein privater Abschnitt im Übertragungsdatenstrom reserviert, was aber nicht bedeutet, dass damit ein gewisser Bandbreitenanteil garantiert ist. Vielmehr kann der Multiplexer MUX so eingestellt sein, dass das entsprechende ASI nur dann aktiviert wird, wenn eine Restbandbreite vorhanden ist, was eventuell auch zu Datenverlusten führen kann, wie weiter unten näher erläutert. Der Multiplexer MUX kann unterschiedliche und variierende Bitraten an seinen ASI-Eingängen verarbeiten. Üblicherweise füllt ein Multiplexer MUX den von ihm erzeugten Übertragungsdatenstrom mit Füllbits (Null-Paketen) bis zur maximalen Kanalbandbreite auf, wenn die in den Übertragungsdatenstrom einzufügenden Programme nicht die gesamte Kanalbandbreite beanspruchen. Dieses Verhalten erlaubt es auch, die dem Multiplexer MUX vorgeschalteten Encoder Datenströme mit variierenden Bitraten gemäß der Komplexität der jeweils zu codierenden Videosignale erzeugen zu lassen, wodurch mehrere Eingangsdatenströme miteinander vereinigt werden, indem die Tatsache ausgenützt wird, dass die durchschnittliche Bitratensumme aller dieser variablen Datenströme allgemein kleiner sein wird als die Summe der Maximalbitrate eines jeden Datenstroms. Dies bedeutet aber auch, dass an den Eingängen des Multiplexers meistens Daten mit variierender Bitrate ankommen. Diese Information ist aus der Management Konsole MC auslesbar und wird in einer vorteilhaften Ausgestaltung der Erfindung dazu verwendet, die Bitrate der in den Übertragungsdatenstrom einzuspeisenden Fragmente FRx anzupassen, um die vorhandene freie Kanalbandbreite jeweils optimal auszunutzen und somit für die Übertragung der Fragmente der Zusatzsendungen eine maximale Übertragungsrate zu erzielen. Die Herausforderung bei diesem Ansatz zur Einspeisung der Fragmente FRx in den Übertragungsdatenstrom ist jedoch die Tatsache, dass der Fall eintreten kann, dass der Multiplexer MUX überlastet wird, indem die Summe der Bitraten an seinen ASI-Eingängen die maximal zulässige Bitrate übersteigt. In diesem Fall gehen unweigerlich Daten im Multiplexer verloren, wobei es sich auch um Fragmente FRx der Zusatzsendungen handeln kann. Um in dieser kritischen Situation keinen Datenverlust hinnehmen zu müssen, ist erfindungsgemäß eine Fehlerbehandlung vorgesehen, bei der der Übertragungsdatenstrom TDS vom Ausgang des Multiplexers MUX zum ECS zurückgekoppelt wird, wo der Übertragungsdatenstrom TDS dahingehend analysiert wird, ob auch alle zur Übertragung vorgesehenen Fragmente FRx darin enthalten sind. Ist dies nicht der Fall, so veranlasst der ECS die erneute Übertragung der verlorengegangenen Fragmente.

Der Übertragungsdatenstrom TDS wird nach dem Multiplexer in einen Rundfunkkanal CH eingespeist, bei dem es sich beispielsweise um einen Kabelkanal oder einen digitalen Satelliten-Rundfunkkanal handelt.

Der zweite erfindungsgemäße Ansatz zum Einspeisen der Fragmente FRx der Zusatzsendungen und/oder die Zusatzinformation ZI in den Übertragungsdatenstrom TDS ist im Blockschaltbild der Rundfunksendeeinrichtung 1' gemäß Fig. 2 dargestellt, die sich von der Rundfunksendeeinrichtung 1 insofern unterscheidet, als die einzufügenden Fragmente FRx nicht zu einem Eingang des Multiplexers MUX zugeführt werden, sondern hinter dem Ausgang des Multiplexers ein Dateneinfügegerät DI vorgesehen ist, dem einerseits der vom Multiplexer MUX gelieferte vorläufige Übertragungsdatenstrom TDS' zugeführt wird und dem andererseits vom ECS die Fragmente FRx zugeführt werden. Das Dateneinfügegerät DI scannt den vorläufigen Übertragungsdatenstrom TDS' auf Füllbits und ersetzt entdeckte Füllbits durch Datenbits der Fragmente. Die Füllbits können bei diesem Ansatz als privater Abschnitt des Übertragungsdatenstroms angesehen werden, der für die erfindungsgemäße Anwendung zur Verfügung steht. Mit dieser Strategie kann das EDIBS System ein Maximum an durch eine Hauptsendung etc. nicht verwendeter Bandbreite für die Übertragung der Fragmente FRx der Zusatzsendungen benützen, wobei das Problem von möglicherweise im Multiplexer MUX verworfenen Daten von Fragmenten nicht auftreten kann. Es muss auch wenig Bedacht auf die Bandbreitensituation am Eingang des Multiplexers MUX genommen werden, da im schlechtesten Fall (volle Bandbreitenausnützung durch den Multiplexer) sich nur die Übertragung der Fragmente FRx verzögert. Statistisch wird jedoch immer ausreichend Restbandbreite für die Übertragung der Fragmente FRx in angemessener Zeit zur Verfügung stehen.

Es sei jedoch erwähnt, dass Rundfunkanstalten trotz der unbestreitbaren Vorteile dieses letzteren Ansatzes ihm gegenüber skeptisch gegenüberstehen können, da das Nachschalten eines Zusatzgeräts hinter dem Multiplexer zu einer zusätzlichen Signalverzögerung des Übertragungsdatenstroms TDS führt und bei einem Ausfall des Zusatzgeräts ein Blackout am Rundfunkkanal CH auftreten kann. Daher ist das Dateneinfügegerät DI als schnelles, hochverfügbares, eventuell redundant ausgelegtes Gerät auszuführen. Es gibt am Markt erhältliche Geräte, die für die Zwecke der Erfindung als Dateneinfügegerät DI verwendet werden können, z.B. das Gerät DTV DIPO10 der Firma Rohde & Schwarz.

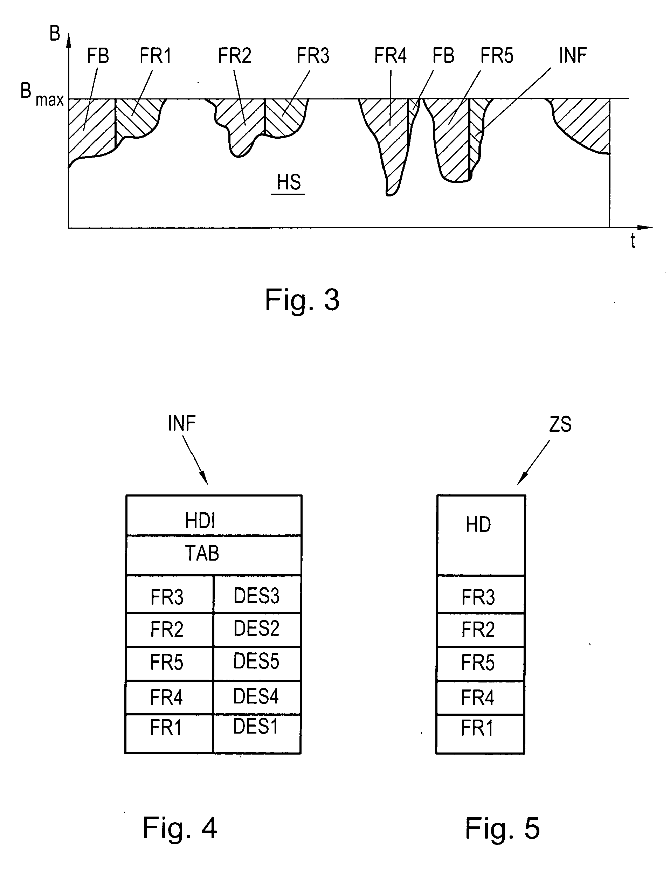

Fig. 3 zeigt ein Diagramm des Verlaufs der Nutzung der Kanalbandbreite B des Übertragungskanals CH über der Zeit t durch den Übertragungsdatenstrom TDS. Die maximale Bandbreite Bmax des Übertragungskanals ist limitiert. Im unteren, nicht schraffierten Teil des Diagramms ist der Bandbreitenbedarf für die Hauptsendung HS dargestellt. Man erkennt, dass die Hauptsendung HS nur zeitweise die maximale Bandbreite Bmax beansprucht. Nicht benötigte Bandbreite wird durch Füllbits FB bis zur Maximalbandbreite Bmax ergänzt. Gemäß der Erfindung wurden, wie oben beschrieben, Fragmente FRx (mit x = Fragmentnummer) in den Übertragungsdatenstrom TDS eingefügt, in diesem Beispiel die Fragmente FR1 bis FR5, indem die Füllbits durch Fragmentdaten ersetzt wurden. Zusätzlich wurde auch eine Datei INF in den Übertragungsdatenstrom eingebettet, die eine Tabelle TAB umfasst, in der die Reihenfolge aufgelistet ist, in der die in den Übertragungsdatenstrom TDS eingebetteten Fragmente an der Empfangsseite des Rundfunkkanals zu einer Zusatzsendung ZS zusammengesetzt werden müssen. Neben der Nummerierung der Fragmente enthält die Tabelle TAB auch noch eine Beschreibung DESx (x = Fragmentnummer) der Fragmente. Die Datei INF ist in Fig. 4 schematisch dargestellt und umfasst neben der Tabelle TAB noch ergänzende Informationen HDI über die Zusatzsendung. Die Zusatzsendung ZS ist in Fig. 5 schematisch dargestellt und umfasst einen beim Zusammensetzen der Zusatzsendung ZS generierten Header HD und die in der richtigen Reihenfolge angeordneten Fragmenten FR1 - FR5, wobei der Header HD unter Verwendung der in der Datei INF enthaltenen ergänzenden Information HDI generiert wurde.

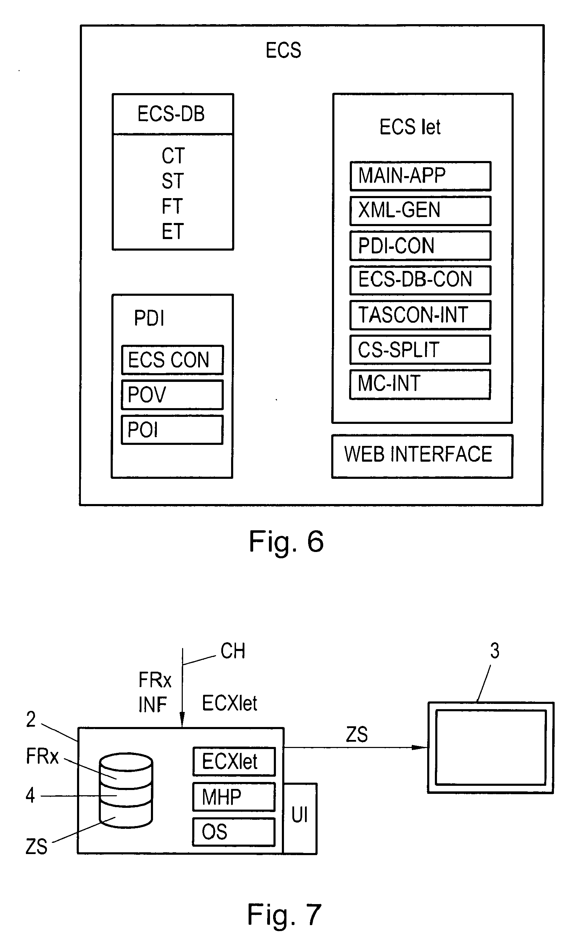

Der Embedded Content Server ECS, auf dem das erfindungsgemäße Verfahren abläuft, ist als Computer, z.B. als Personal Computer, ausgebildet. Anhand der symbolischen Darstellung von Fig. 6 werden nun die für die Erfindung wesentlichen Hardware- und Softwarekomponenten des ECS erklärt.

Der ECS umfasst greift auf eine interne oder externe Datenbank ECS-DB zu, in der Zusatzsendungstabellen CT der zur Verfügung stehenden Zusatzsendungen, Servicetabellen ST mit Daten, die sich auf EDIBS Dienste beziehen, Fragment-Tabellen FT der zu übertragenden Fragmente und Ereignistabellen ET mit Ereignisdaten, die sich auf einen Dienst und die Programmpläne von Rundfunkanstalten beziehen, enthalten sind.

In den Zusatzsendungstabellen CT sind entweder die Zusatzsendungen selbst oder Bezüge auf ihren Speicherort und beschreibende Metadaten gespeichert.

In den Servicetabellen ST sind Definitionen der zur Verfügung stehenden Dienste, wie z.B. das Ausspiel-Zeitschema, erforderliche Bonuspunkte, die das Abspielen ermöglichen, Beschreibungen der Dienste etc. gespeichert. Weiters ist der momentane Status der Dienste gespeichert, z.B. die Anzahl an Fragmenten, die bereits ausgespielt wurde.

In den Fragmenttabellen sind die an die Rundfunkempfangsgeräte zu übertragenden Fragmente oder Bezüge auf ihren Speicherort gespeichert, sowie die Beziehungen zu den Diensten, zu denen sie gehören. Diese Beziehungen umfassen statistische und historische Daten, z.B. wie oft und zu welchen exakten Zeiten die Fragmente jeweils ausgespielt wurden, sowie die Priorität für weiteres Ausspielen, die sich unter anderem aus diesen Daten errechnet.

In den Ereignistabellen ET sind Ereignisdaten gespeichert, die sich auf Dienste und die Programmschemata der TV-Stationen beziehen. Diese Ereignisse dienen dazu, Rundfunkempfangsgeräte zu triggern, z.B. um das Abspielen einer gespeicherten Zusatzsendung zu starten.

Das erfindungsgemäße Verfahren ist als Computerprogramm ECSlet ausgestaltet, das im ECS abgearbeitet wird. Die Hauptaufgabe dieses Computerprogramms ECSlet ist es, alle Komponenten des ECS zu überwachen und zu steuern und sicherzustellen, dass alle Komponenten korrekt arbeiten. Das Computerprogramm ECSlet umfasst mehrere Softwaremodule, unter anderem:
einen XML-Generator (XML-GEN), der die Daten für die XML-Dateien compiliert, oder einen Verschlüsselungsgenerator für Dateien, die die Nummerierung und Beschreibung der Fragmente enthalten, die gerade und in naher Zukunft ausgespielt werden, um das auf den Rundfunkempfangsgeräten ablaufende Computerprogramm über die Bedeutung und den Inhalt der übertragenen Daten zu informieren und Instruktionen zu geben, in welcher Reihenfolge die Fragmente zusammenzusetzen sind.
Einen PDI Connector PDI-CON, der das Interface zum so genannten "Private Data Inserter" PDI darstellt, das unten erklärt wird. Der PDI Connector PDI-CON übergibt die Daten in Form von Dateien an das PDI, das sie dann aussendet und Rückinformation über erfolgreich übertragene Daten gibt.
Ein ECS-Datenbank Connector ECS-DB-CON, der für den Zugriff auf die ECS-Datenbank ECS-DB ausgebildet ist.
Ein TASCON Interface (TASCON-INT) zu externen TASCON Systemen und/oder Programmplanungsdatenbanken der Rundfunkanstalt. Dieses Interfaces informiert den ECS jederzeit, welches Element des aktuellen Programm-Zeitplans zu einem bestimmten Zeitpunkt übertragen wird. Diese Information wird benutzt, um das Ausspielen der EDIBS Dienste mit dem Programm-Zeitplan zu synchronisieren und wird zusätzlich für statistische Zwecke in der ECS-Datenbank ECS-DB gespeichert.
Einen Zusatzsendungsteiler CS-SPLIT, der die großen Dateien, aus denen die Zusatzsendungen bestehen und deren Übertragung eine zu lange Zeitdauer in Anspruch nehmen würde, in kleinere Fragment-Dateien unterteilt und die ECS-Datenbank ECS-DB aktualisiert. Die Größe der Fragmente wird anhand einer geschätzten Bandbreite zur Ausspielzeit berechnet, so dass Übertragungslimitierungen nicht überschritten werden.
Ein Managementkonsolen-Interface (MC-INT), das eine Schnittstelle zur externen Managementkonsole der Rundfunkstation bereitstellt. Die Managementkonsole informiert den ECS über den aktuellen Status des Multiplexens der verschiedenen Sendungsteile zu einem Übertragungsdatenstrom und liefert damit Bandbreiteninformation. Diese Daten werden analysiert und in der ECS-DB gespeichert, um eine Historie der verfügbaren Bandbreite zu führen, die zur Berechnung passender Fragmentgrößen für bestimmte Ausspielzeiten benötigt wird.

Der ECS umfasst weiters den bereits erwähnten Private Data Inserter (PDI), der für das Einfügen aller im ECS erzeugten Fragmente und sonstiger Dateien in einen Übertragungsdatenstrom verantwortlich ist und auf einem asynchronen seriellen Interface basiert, über das die Daten an andere Komponenten in der Rundfunksendeeinrichtung, wie den Multiplexer, übertragen und Daten von den Komponenten der Rundfunksendeinrichtung empfangen werden. Der PDI arbeitet unter Steuerung durch ein im ECS ablaufendes Computerprogramm, das die folgenden wesentlichen Programmmodule aufweist:
Einen ECS Connector (ECS-CON), der ein Interface zum Computerprogramm ECSlet bietet, von dem es die zu übertragenden Dateien (Fragmente und Informationsdateien) erhält und das es über die erfolgreiche Übertragung der Dateien über den Übertragungskanal informiert.
Eine Ausspielvalidierung POV, die dann verwendet wird, wenn wie oben anhand der Fig. 1 beschrieben, die Fragmente und Informationsdateien zu einem Eingang des Multiplexers geführt werden, in welchem Fall nicht auszuschließen ist, dass aufgrund von Überlastung des Multiplexers einige Daten verloren gehen. Um dies zu detektieren, wird der Übertragungsdatenstrom zum PDI rückgekoppelt und die Ausspielvalidierung POV analysiert den Übertragungsdatenstrom, ob er auch alle an den Multiplexer übergebenen Dateien vollständig enthält. Falls einige Daten fehlen, so werden die entsprechenden Dateien nochmals dem Multiplexer übergeben.
Ein Ausspiel-Interface POI, das dafür verantwortlich ist, die Daten aus den auszuspielenden Dateien in ein erforderliches Format zu übertragen und sie an die Ausspiel-Hardware der TV-Station zu übergeben. Das kann ein asynchroner serieller
Eingang des Multiplexers sein, oder in der oben anhand von Fig. 2 beschriebenen Konfiguration, bei der die Fragmente und Informationsdateien nach dem Multiplexer mittels eines Dateneinfügegeräts in einen vorläufigen Übertragungsdatenstrom eingespielt werden, das Dateneinfügegerät.

Weiters umfasst der ECS ein Web-Interface, mit dem verschiedene Konfigurationseinstellungen des ECS über ein Computernetzwerk vorgenommen werden können, Benutzer des ECS verwaltet werden können, Zusatzsendungen in den ECS eingespielt werden können, indem sie direkt in den ECS hinaufgeladen werden oder ein Import durch Geräte in der TV-Station, wie einen Videoserver etc., initialisiert wird. Über das Web-Interface kann auch die EDIBS Dienstplanung abgewickelt werden, d.h. die Zuordnung von Zusatzsendungen zu einem spezifischen EDIBS Dienst, die Definition verschiedener Parameter dieses Dienstes, wie die Vorgabe von Bonuspunkten, die für die Berechtigung zum Abspielen der Zusatzsendung an einem Rundfunkempfangsgerät erreicht werden müssen, etc.

Nun folgt eine Beschreibung des erfindungsgemäßen Rundfunkempfangsgeräts 2, das in Fig. 7 in einer schematischen Blockbildansicht dargestellt ist, wobei aus Gründen der Übersichtlichkeit nur die für die Erfindung wesentlichen Komponenten eingezeichnet sind, Standardkomponenten, die dem Fachmann bekannt sind, jedoch weggelassen wurden.

Vorausgeschickt sei, dass die EDIBS Client Software ( ECXlet), die in den Rundfunkempfangsgeräten ablaufen soll und den empfangsseitigen Teil des erfindungsgemäßen Verfahrens darstellt, im Standard Sendungs-Objektkarussell der Rundfunkanstalt residiert und daher ständig an alle Rundfunkempfänger übertragen wird. Sobald also ein Zuseher seine Rundfunkempfangseinrichtung 2 auf einen Rundfunkkanal CH umschaltet, der EDIBS anbietet, kann die EDIBS Client Software ( ECXlet) von der Rundfunkempfangseinrichtung 2 des Zusehers empfangen werden, natürlich eine dazu geeignete Rundfunkempfangseinrichtung vorausgesetzt, z.B. eine MHP fähige Set Top Box (STB). Eine solche Set Top Box weist ein Betriebssystem OS auf, auf dem eine MHP Softwareplattform aufsetzt. Nach dem Empfang der EDIBS Client Software ECXlet wird es von dem Betriebssystem OS der Rundfunkempfangseinrichtung 2 geladen und ausgeführt und weist den Benutzer zunächst über einen angeschlossenen Bildschirm 3 auf die Möglichkeit hin, dass er die EDIBS Dienste nutzen kann. Der Benutzer kann seine Eingaben über ein Benutzer-Interface UI, wie z.B. eine Tastatur, vornehmen. Außerdem überprüft die EDIBS Client Software ECXlet, ob sie bereits früher gelaufen ist und daher möglicherweise bereits Benutzereinstellungen lokal abgespeichert sind. Wenn nicht, bietet sie dem Benutzer an persönliche Informationen einzutragen und Einstellungen vorzunehmen, die auf das Verhalten der EDIBS Dienste wirken. Wenn sich der Benutzer dafür entscheidet EDIBS zu verwenden, managt die EDIBS Client Software ECXlet in der Rundfunkempfangseinrichtung 2 automatisch den Empfang, die lokale Speicherung, das Abspielen und das Löschen lokal gespeicherter Zusatzsendungen ZS bzw. deren Fragmente FRx und anderer Informationsdateien INF, die unter Verwendung der EDIBS Dienste über den Rundfunkkanal CH an die Rundfunkempfangseinrichtung 2 übertragen werden. Genauer gesagt, schaltet die EDIBS Client Software ECXlet einen im Hintergrund laufenden "Datensammlungsmodus" ein, der die Zusatzinformation ZI und/oder die Fragmente FRx empfängt, in die die über den Rundfunkübertragungskanal CH übertragenen Zusatzsendungen unterteilt sind, diese Fragmente FRx und/oder die Zusatzinformation ZI in einem Speicher 4, z.B. einer Festplatte der Rundfunkempfangseinrichtung 2 speichert und außerdem auf Informationsdateien INF wartet, die Information über die Reihenfolge enthalten, in der Fragmente FRx zu einer Zusatzsendung ZS zusammensetzbar sind. Sobald diese Informationsdateien INF empfangen wurden, werden die Zusatzsendungen ZS zusammengesetzt und im Speicher 4 zwischengespeichert. Die zugrundeliegenden Fragmente FRx können danach gelöscht werden.

Die zwischengespeicherten Zusatzsendungen ZS und/oder die Zusatzinformation ZI werden abhängig von der Art der ausgewählten EDIBS Dienste behandelt, gespeichert und die Zusatzsendungen ZS zum Abspielen dem Benutzer der Rundfunksendeeinrichtung 2 angeboten. Das Abspielen kann entweder auf Wunsch des Benutzers erfolgen, oder von der Rundfunkanstalt durch über den Rundfunkkanal übertragene Befehle, die in der Rundfunkempfangseinrichtung 2 von der EDIBS Client Software ECXlet ausgewertet werden, ausgelöst werden, oder durch Befehle von der Rundfunkanstalt angeboten, tatsächlich aber nur nach einer Bestätigung des Benutzers gestartet werden. Das Abspielen der Zusatzsendungen ZS oder bestimmter Hauptsendungen kann in Abhängigkeit von der empfangenen Zusatzinformation gesteuert werden.

Damit sich die EDIBS Client Software ECXlet nahtlos in bereits bestehende Rundfunkempfangseinrichtungen 2 integriert, ist sie standardkonform programmiert, z.B. als MHP konformes Java Xlet. Für gewisse Dienste kann es innerhalb des Xlets zusätzliche Softwaremodule geben, die Zusatzfunktionalität ins Spiel bringen. So ist beispielsweise ein Bonus-Management vorgesehen, das die Betrachtungszeit gewisser Sendungen (z.B. Werbungsblöcke) aufzeichnet und vordefinierte oder anhand gewisser Benutzerkriterien ausgewählte Ereignisse im Übertragungsdatenstrom oder in einzelnen Sendungen mitverfolgt und sammelt und somit ein "Vielseherverhalten" des Benutzers erfassen kann.

Optional wird die EDIBS Client Software ECXlet um ein Modul ergänzt, das mitverfolgte Daten unter Einwilligung des Benutzers der Rundfunkempfangseinrichtung 2 an die TV-Station zurücksendet.

## Patentansprüche

**1.** Verfahren zur gleichzeitigen Übertragung einer Hauptsendung (HS) und zumindest einer Zusatzsendung (ZS) und/oder Zusatzinformation (ZI) in einem digitalen Übertragungsdatenstrom (TDS) über einen Rundfunkkanal (CH) mit einer vorgegebenen maximalen Kanalbandbreite (Bmax), **dadurch gekennzeichnet, dass** die zumindest eine Zusatzsendung (ZS) vor ihrer Übertragung in Fragmente (FRx) unterteilt wird und die einzelnen Fragmente (FRx) und/oder die Zusatzinformation (ZI), vorzugsweise asynchron, in den Übertragungsdatenstrom (TDS) eingefügt werden, wenn die Hauptsendung (HS) im Übertragungsdatenstrom (TDS) nicht die maximale Kanalbandbreite (Bmax) des Rundfunkkanals (CH) beansprucht.

**2.** Übertragungsverfahren nach Anspruch 1, **dadurch gekennzeichnet, dass** zusätzlich zu den Fragmenten (FRx) der zumindest einen Zusatzsendung (ZS) Information (INF) über die Reihenfolge, gemäß der auf einer Empfangsseite des Rundfunkkanals die Fragmente zu einer Zusatzsendung zusammenzusetzen sind, über den Rundfunkkanal übertragen wird, wobei diese Information (INF) vorzugsweise in privaten Abschnitten des Übertragungsdatenstroms eingefügt wird.

**3.** Übertragungsverfahren nach Anspruch 2, **dadurch gekennzeichnet, dass** bei der Unterteilung der Zusatzsendungen (ZS) in Fragmente (FRx) jedes Fragment mit einer eindeutigen Fragmentkennung versehen wird und die Information (INF) über die Reihenfolge, gemäß der auf einer Empfangsseite des Rundfunkkanals die Fragmente zu einer Zusatzsendung zusammenzusetzen sind, eine Tabelle (TAB) mit den Fragmentkennungen in der Zusammensetzungsreihenfolge umfasst.

**4.** Übertragungsverfahren nach Anspruch 2 oder 3, **dadurch gekennzeichnet, dass** die Reihenfolgen-Information in XML-Dateien oder verschlüsselte Dateien eingebettet werden.

**4.** Übertragungsverfahren nach einem der vorhergehenden Ansprüche, **dadurch gekennzeichnet, dass** beim Einfügen der Fragmente (FRx) und/oder Zusatzinformation (ZI) in den Übertragungsdatenstrom (TDS) in diesem enthaltene Füllbits (FB) durch Datenbits der Fragmente ersetzt werden.

**5.** Übertragungsverfahren nach einem der vorhergehenden Ansprüche, **dadurch gekennzeichnet, dass** die Fragmente (FRx) und/oder Zusatzinformation (ZI) in Abhängigkeit von einer bestimmten Hauptsendung (HS) oder gemäß einem Zeitschema ausgespielt werden.

**6.** Übertragungsverfahren nach einem der vorhergehenden Ansprüche, **dadurch gekennzeichnet, dass** die Größe der Fragmente (FRx) in Abhängigkeit von einem oder mehreren der folgenden Parameter festgelegt wird:
• der zu erwartende durchschnittliche ungenutzte Anteil der Kanalbandbreite (B);
• die Dauer der Hauptsendung, wenn festgelegt ist, dass vorgegebene Fragmente während der Hauptsendung zu übertragen sind;
• die Codierungsqualität der Zusatzsendung;
• die Nettodauer der Zusatzsendung.

**7.** Rundfunkempfangseinrichtung (2), welche mit einem Rundfunkkanal (CH) verbindbar ist und einen Speicher (4) zur Speicherung von Zusatzsendungen (ZS) bzw. deren Fragmenten (FRx) und/oder Zusatzinformation (ZI) umfasst, **gekennzeichnet durch** Mittel (ECXlet) zum Verarbeiten von Fragmenten und daraus zusammengesetzten Zusatzsendungen und/oder zum Verarbeiten der Zusatzinformation (ZI), wobei das Verarbeiten von Fragmenten das Empfangen von Fragmenten über den Rundfunkkanal, das Abspeichern der empfangenen Fragmente in dem Speicher, das Zusammensetzen der gespeicherten Fragmente zu zumindest einer Zusatzsendung und das Speichern und Abspielen der Zusatzsendungen umfasst, und wobei das Verarbeiten der Zusatzinformation (ZI) das Auswerten umfasst, ob eine hinreichende Anzahl an Zusatzinformationseinheiten und/oder Zusatzinformation mit spezifischen Eigenschaften empfangen wurde, die es erlauben, ein bestimmtes Programm zur Wiedergabe freizuschalten.

**8.** Rundfunkempfangseinrichtung nach Anspruch 7, **dadurch gekennzeichnet, dass** die Mittel (ECXlet) zum Verarbeiten von Fragmenten und daraus zusammengesetzten Zusatzsendungen und/oder Zusatzinformation (ZI) dazu ausgebildet sind, unter Verwendung von über den Rundfunkkanal empfangener Information (INF) über die Reihenfolge, in denen die Fragmente zu einer Zusatzsendung zusammenzusetzen sind, die Zusatzsendungen (ZS) zusammenzusetzen.

**9.** Rundfunkempfangseinrichtung nach Anspruch 7, **dadurch gekennzeichnet, dass** die Mittel (ECXlet) zum Verarbeiten von Fragmenten (FRx) und daraus zusammengesetzten Zusatzsendungen und/oder Zusatzinformation (ZI) als in der Rundfunkempfangseinrichtung (2) abarbeitbares Computerprogramm ausgebildet sind, wobei das Computerprogramm vorzugsweise über den Rundfunkkanal (CH) in die Rundfunkempfangseinrichtung (2) ladbar ist.

**10.** Rundfunkempfangseinrichtung nach einem der Ansprüche 7 bis 9, **dadurch gekennzeichnet, dass** die Mittel (ECXlet) zum Verarbeiten von Fragmenten und daraus zusammengesetzten Zusatzsendungen und/oder Zusatzinformation (ZI) durch Befehle, die über den Rundfunkkanal empfangenen werden, und/oder durch ein Benutzer-Interface (UI) der Rundfunkempfangseinrichtung (2) steuerbar sind.

**11.** Rundfunksendeeinrichtung (1, 1'), welche zur gleichzeitigen Übertragung einer Hauptsendung (HS) und zumindest einer Zusatzsendung (ZS) und/oder Zusatzinformation (ZI) in einem digitalen Übertragungsdatenstrom (TDS) über einen Rundfunkkanal (CH) mit einer vorgegebenen maximalen Kanalbandbreite (Bmax) ausgebildet ist, **gekennzeichnet durch** Mittel (CS-SPLIT) zur Unterteilung der zumindest einen Zusatzsendung in Fragmente (FRx) und Mittel (PDI, MUX)) zum asynchronen Einfügen der einzelnen Fragmente und/oder Zusatzinformation in den Übertragungsdatenstrom (TDS), wenn die Hauptsendung im Übertragungsdatenstrom (TDS) nicht die maximale Kanalbandbreite (Bmax) des Rundfunkkanals (CH) beansprucht.

**12.** Rundfunksendeeinrichtung nach Anspruch 11, **dadurch gekennzeichnet, dass** die Mittel zum asynchronen Einfügen der einzelnen Fragmente und/oder Zusatzinformation in den Übertragungsdatenstrom einen Multiplexer (MUX) zur Zusammensetzung eines Übertragungsdatenstroms aus verschiedenen Datenstromquellen umfassen, dem an einem seiner Eingänge die Fragmente (FRx) zuführbar sind.

**13.** Rundfunksendeeinrichtung (1) nach Anspruch 12, **gekennzeichnet durch** eine Ausspielvalidierungseinheit (POV), die den Übertragungsdatenstrom (TDS) hinter dem Ausgang des Multiplexers dahingehend analysiert, ob alle vorgegebenen Fragmente (FRx) vollständig in dem Übertragungsdatenstrom enthalten sind und für Fragmente, für die dies nicht der Fall ist, eine erneute Einfügung in den Übertragungsdatenstrom veranlasst.

**14.** Rundfunksendeeinrichtung (1') nach Anspruch 11, **dadurch gekennzeichnet, dass** die Fragmente (FRx) durch ein hinter einem Multiplexer (MUX), der zur Zusammensetzung eines vorläufigen Übertragungsdatenstroms (TDS') aus verschiedenen Datenstromquellen ausgebildet ist, angeordnetes Dateneinfügegerät (DI) einfügbar sind, wobei dem Dateneinfügegerät (DI) der vorläufige Übertragungsdatenstrom (TDS') zuführbar ist, in den das Dateneinfügegerät (DI) bis zur Maximalbandbreite (Bmax) Fragmente (FRx) einfügen kann.
